# EUROPEAN PATENT SPECIFICATION

(11) **EP 4 136 335 B1**
(45) Date of publication and mention of the grant of the patent: **26.02.2025**
(21) Application number: 20721670.6
(22) Date of filing: 17.04.2020
(51) Int. Cl.: F02D 41/22, F02D 41/28

(54) **AN ENGINE SPEED MEASUREMENT CIRCUIT**
SCHALTUNG ZUR MESSUNG DER DREHZAHL EINES MOTORS
CIRCUIT DE MESURE DE VITESSE DE MOTEUR

(43) Date of publication of application: 22.02.2023
(73) Proprietor: Wärtsilä Finland Oy, 65170 Vaasa (FI)
(72) Inventor: OJANPERÄ, Antti, 65100 Vaasa (FI)
(74) Representative: Berggren Oy
(86) International application number: PCT/FI2020/050252
(87) International publication number: WO 2021/209677

(56) References cited:
- WO-A1-2004/070319
- WO-A1-99/27377

## Description

### TECHNICAL FIELD

The present invention relates to processing of an electrical signal that is descriptive of a speed of rotating component, such as the speed of a combustion engine.

### BACKGROUND

Accurate and reliable information on the speed of a combustion engine is an important measure in terms of controlling and monitoring operation of the combustion engine. In a practical implementation the engine speed measurement typically relies on a speed sensor arranged to detect rotation speed of the crankshaft and/or the flywheel of the combustion engine and to generate an electrical speed signal that comprises a pulse train whose pulse frequency is descriptive of the speed of the crankshaft/flywheel of the combustion engine, thereby serving as an indication of a rotation speed of the combustion engine. Engine speed measurement using such a basic mechanism is well known in the art it is therefore not discussed herein in more detail.

Any anomalies in engine control or engine performance due to errors or inaccuracies in the engine speed measurement may result in increased fuel consumption and/or increased emissions or may lead to compromised or even interrupted power supply. While such compromised performance of a combustion engine in any usage scenario should be avoided to extent possible, such compromised performance may be especially disadvantageous in usage scenarios where one or more combustion engines are applied as the supply of mechanical energy in demanding industrial environments such as power plants, marine vessels, offshore platforms such as oil rigs, etc. where the combustion engine(s) are continuously operated for prolonged periods of time and where efficient and uninterrupted power supply from the combustion engine is typically a critical characteristic.

In this regard, reliability of the engine speed measurement does not only concern numerical accuracy of the measured engine speed but also involves recognition of various error conditions that may disturb or completely disable the engine speed measurement to facilitate efficient and swift maintenance in case such condition arises.

In related art, WO 99/27377 A1 discloses a symmetric voltage divider is connected between the terminals of an inductive sensor. The tap of said voltage divider is fed to a reference voltage via a resistor. A diagnostic voltage is present on the tap. The diagnostic voltage is first compared with two threshold values at rest and then sampled in an operating state. The difference is calculated from the largest and smallest sample value, said difference being compared with a third threshold value. Short circuits or line interruptions are recognized/displayed from the comparison result.

Further in related art, WO 2004/070319 A1 discloses a diagnostic method for a sensor in a motor vehicle equipped with an internal combustion engine. According to said method, during the operation of the motor vehicle, an output signal of the sensor is analysed to determine whether a maximum value of the output signal falls below a first threshold value and/or whether a minimum value of the output signal exceeds a second threshold value. In the latter case, a signal is sent to a control unit, said signal indicating to the latter that the sensor may deliver incorrect data when the motor vehicle is started again.

### SUMMARY

In view of the foregoing, it is an object of the present invention to provide a technique for measuring speed of a rotating component, such as the rotation speed of a combustion engine in an accurate manner while enabling recognition of one or more predefined error conditions that may be involved in the speed measurement.

The object(s) of the invention are reached by a circuit, by an apparatus and by a method defined in the respective independent claims.

According to an example embodiment, a circuit for measuring a rotation speed of a combustion engine is provided, the circuit comprising a state detector coupled between an operating voltage and a ground potential and coupled to receive, from a speed sensor, an electrical signal that has a time-varying signal voltage that exhibits local maxima at a frequency that has a predefined relationship to the rotation speed, wherein the state detector is arranged to derive, based on the electrical signal, a state indication that indicates whether the electrical signal represents one of a high state or a low state, and a diagnostic signal that is descriptive of the operational state of the speed measurement circuit, wherein the diagnostic signal conveys a diagnostic value that is descriptive of current operational state of the speed measurement circuit, wherein current operational state is one of a normal operational state or an abnormal operational state and wherein the state detector is arranged to derive the diagnostic value based on the signal voltage of the electrical signal; and a controller coupled to receive the state indications and the diagnostic signal and arranged to compute the rotation speed based on a time series of the state indications in dependence of the diagnostic signal in view of said predefined relationship, wherein the state detector has defined therefor: two or more predefined signal voltage sub-ranges, each associated with a respective abnormal operational state of the speed measurement circuit two or more predefined intermediate diagnostic voltage sub-ranges, each representing a respective abnormal operational state of the speed measurement circuit.

According to another example embodiment, a method for measuring a rotation speed of a combustion engine is provided, the method comprising receiving, from a speed sensor coupled to measure the rotation speed, an electrical signal that has a time-varying signal voltage that exhibits local maxima at a frequency that has a predefined relationship to the rotation speed; deriving, based on the electrical signal, a state indication that indicates whether the electrical signal represents one of a high state or a low state; deriving, based on the electrical signal, a diagnostic signal that is descriptive of the operational state of the speed measurement circuit, wherein the diagnostic signal conveys a diagnostic value that is descriptive of current operational state of the speed measurement circuit, wherein current operational state is one of a normal operational state or an abnormal operational state and wherein the diagnostic value is derived based on the signal voltage of the electrical signal; and deriving the rotation speed based on a time series of the state indications in dependence of the diagnostic signal in view of said predefined relationship, wherein the diagnostic value is derived via application of the following: two or more predefined signal voltage sub-ranges, each associated with a respective abnormal operational state of the speed measurement circuit two or more predefined intermediate diagnostic voltage sub-ranges, each representing a respective abnormal operational state of the speed measurement circuit.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described in the following are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 schematically illustrates a speed measurement circuit according to an example;
Figure 2 schematically illustrates an implementation of the speed measurement circuit according to an example;
Figure 3 schematically illustrates the relationship between voltages within the speed measurement circuit according to an example;
Figure 4 schematically illustrates a speed measurement circuit according to an example;
Figure 5 schematically illustrates the relationship between diagnostic voltage sub-ranges and operational states of the speed measurement circuit they serve to represent according to an example;
Figure 6 schematically illustrates an implementation of the speed measurement circuit according to an example;
Figure 7A schematically illustrates some components of a diagnostic voltage generator according to an example;
Figure 7B schematically illustrates some components of a diagnostic voltage generator according to an example;
Figure 8A schematically illustrates the relationship between voltages within the speed measurement circuit according to an example;
Figure 8B schematically illustrates the relationship between voltages within the speed measurement circuit according to an example; and
Figure 9 illustrates a method according to an example.

### DESCRIPTION OF SOME EMBODIMENTS

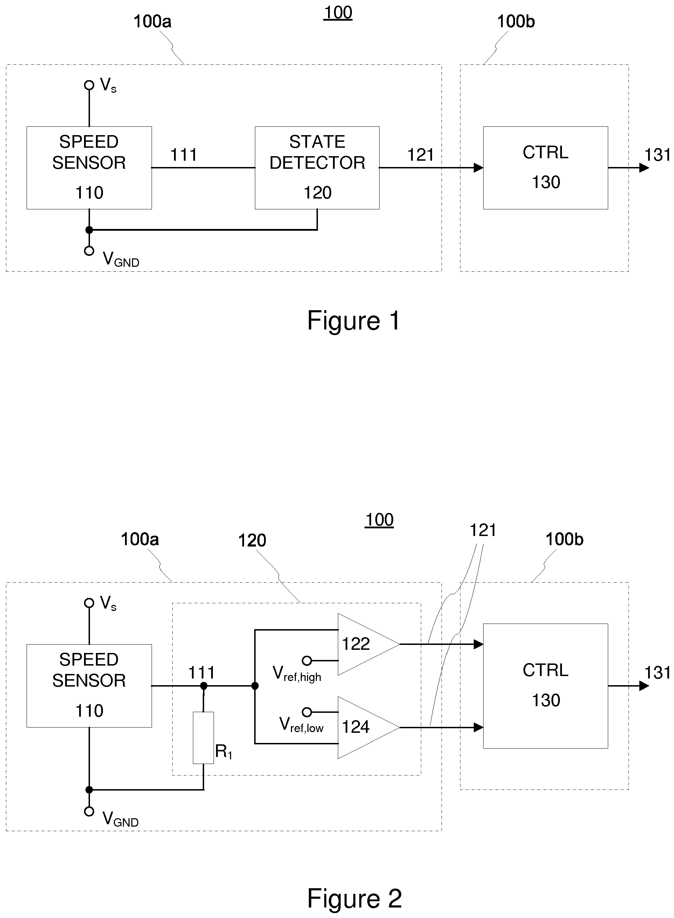

Figure 1 schematically illustrates a speed measurement circuit 100 according to an example, (conceptually) divided into an analog subsystem 100a and a digital subsystem 100b. The speed measurement circuit 100 comprises a speed sensor 110 is coupled to a state detector 120 by a signal line 111. The speed sensor 110 is arranged to provide an analog electrical signal via the signal line 111 to the state detector 120, which is arranged to determine whether the electrical signal currently received thereat represents one of a high state or a low state and to issue a respective state indication 121 to a controller 130 to enable rotation speed calculation therein based on a time series of state indications 121. The speed sensor 110 may comprise, for example, a hall sensor. The speed sensor 110 and the state detector 120 may be coupled to operating voltage *V*ₛ and to a ground potential *V*_{GND}. The speed sensor 110 is arranged to derive the electrical signal as one that is descriptive of rotation speed of a rotary component, e.g. the rotation speed of a crankshaft or a flywheel of a combustion engine. In this regard, in the following the present disclosure simply refers rotation speed of a combustion engine. However, the rotation speed of a component of the combustion engine serves as a non-limiting example and the speed measurements circuits described in the present disclosure are applicable for measuring rotation speeds also in frameworks different from combustion engines.

The electrical signal conveyed via the signal line 111 as an analog signal that has a time-varying voltage and that exhibits local maxima at a frequency that has a predefined relationship to the rotation speed of the combustion engine. This relationship is also known by the controller 130 and it depends on the number of measurement points included in the rotary component of the combustion engine speed of which is being measured by the speed measurement circuit 100. As non-limiting examples, in case of a single measurement point there is one local maxima per revolution and the frequency of local maxima directly corresponds to the rotation speed, whereas in case of N evenly distributed measurement points there are N local maxima per revolution and the frequency of local maxima corresponds to the N times the rotation speed.

A voltage of the electrical signal received via the signal line 111 may be referred to as a signal voltage *V*₁₁₁. The state detector 120 may be arranged to compare the signal voltage *V*₁₁₁ to a high reference voltage *V*_{ref,high} and to a low reference voltage *V*_{ref,low} and to issue a state indication 121 to the controller 130 in consideration of the signal voltage *V*₁₁₁ in view of the high and low reference voltages *V*_{ref,high}, *V*_{ref,low}, where the high reference voltage *V*_{ref,high} is larger than (or equal to) the low reference voltage *V*_{ref,low} and the state indication 121 indicates one of a high state or a low state.

As an example, the state indication 121 may comprise a high state indication in response to the signal voltage *V*₁₁₁ exceeding the high reference voltage *V*_{ref,high} and it may comprise a low state indication in response to the signal voltage *V*₁₁₁ being smaller than the low reference voltage *V*_{ref,low}. In case the signal voltage *V*₁₁₁ is between the high and low reference voltages *V*_{ref,high}, *V*_{ref,low}, the output of state detector 120 is undecided and it may, for example, issue the state indication 121 as one comprising a dedicated 'undecided state' indication instead of issuing one of the high or low state indications or refrain from issuing the state indication 121.

The operating voltage *V*ₛ may be provided by a suitable DC voltage source, whereas characteristics of the first resistor *R*₁ as well as the high and low reference voltages *V*_{ref,high}, *V*_{ref,low} may be selected in view of the characteristics of the applied speed sensor 110 and/or the applied operating voltage *V*ₛ.

The controller 130 may be arranged to compute the rotation speed of the combustion engine based on the time series of state indications 121 obtained from the state detector 120 in view of the knowledge of the predefined relationship between the frequency of local maxima in the signal voltage *V*₁₁₁ and the rotation speed and provide a speed indication 131 that indicates the derived rotation speed. As an example in this regard, the controller 130 may be arranged to derive the rotation speed directly based on respective timings of the state indications 121 obtained from the state detector 120, whereas in another example the controller may be arranged to construct a digital speed signal based on the state indications 121 obtained from the state detector 120 and to derive the rotation speed based on the digital speed signal. In this regard, the controller 130 receives, from the state detector 120, a time series of state indications 121 that are useable, in view of the knowledge of the relationship between the frequency of local maxima in the signal voltage *V*₁₁₁ and the rotation speed, for deriving the digital speed signal in a form of a pulse train whose pulse frequency follows the frequency of local maxima in the signal voltage and *V*₁₁₁ is descriptive of the rotation speed in view of the knowledge of the predefined relationship between the frequency of local maxima in the signal voltage *V*₁₁₁ and the rotation speed.

As an example, computation of the rotation speed directly from the time series of state indications may comprise computing rotation speed based on respective frequencies of changes from the low state to the high state (a rising edge) and/or changes from the high state to the low state (a falling edge) in the time series of state indications 121 in view of the predefined relationship between the frequency of local maxima in the signal voltage *V*₁₁₁ and the rotation speed. In another example, computation of the rotation speed may comprise derivation of the digital speed signal based on the time series of state indications 121 in the controller 130 and computing the rotation speed based on the digital speed signal in view of the predefined relationship between the frequency of local maxima in the signal voltage *V*₁₁₁ and the rotation speed. Therein, reception of the first high state indication that follows reception of a low state indication indicates a rising edge of the digital speed signal while a time period starting from the rising edge and continuing until reception of the next low state indication may represent a binary high state of the digital speed signal, whereas reception of the first low state indication that follows reception of a high state indication indicates a falling edge of the digital speed signal while a time period starting from the falling edge and continuing until reception of the next high state indication may represent a binary low state of the digital speed signal. Consequently, the resulting digital speed signal typically consists of alternating periods of binary high states and binary low states (e.g. binary ones and binary zeros), i.e. a pulse train, wherein the pulse frequency substantially matches the frequency of local maxima in the signal voltage *V*₁₁₁.

Figure 2 schematically illustrates an implementation of the speed measurement circuit 100 according to an example, where the state detector 120 comprises a first resistor *R*₁ coupled between the signal line 111 and the ground potential *V*_{GND} and where the signal line 111 is coupled to a first input terminal of a first comparator 122 and to a second input terminal of a second comparator 124. A second input terminal of the first comparator 122 is coupled to the high reference voltage *V*_{ref,high} and a first input terminal of the second comparator 124 is coupled to the low reference voltage *V*_{ref,low}. The first comparator 122 may be arranged to provide a first predefined voltage (e.g. a zero voltage) when the signal voltage *V*₁₁₁ fails to exceed the high reference voltage *V*_{ref,high} and to provide a second predefined voltage (e.g. a non-zero voltage) that serves as the high state indication in response to the signal voltage *V*₁₁₁ exceeding the high reference voltage *V*_{ref,high}. The second comparator 124 may be arranged to provide the first predefined voltage when the signal voltage *V*₁₁₁ exceeds the low reference voltage *V*_{ref,low} and to provide the second predefined voltage that serves as the low state indication in response to the signal voltage *V*₁₁₁ being smaller than the low reference voltage *V*_{ref,low}. Hence, the respective voltages provided from the respective outputs of the first and second comparators 122, 124 serve as the state indication 121.

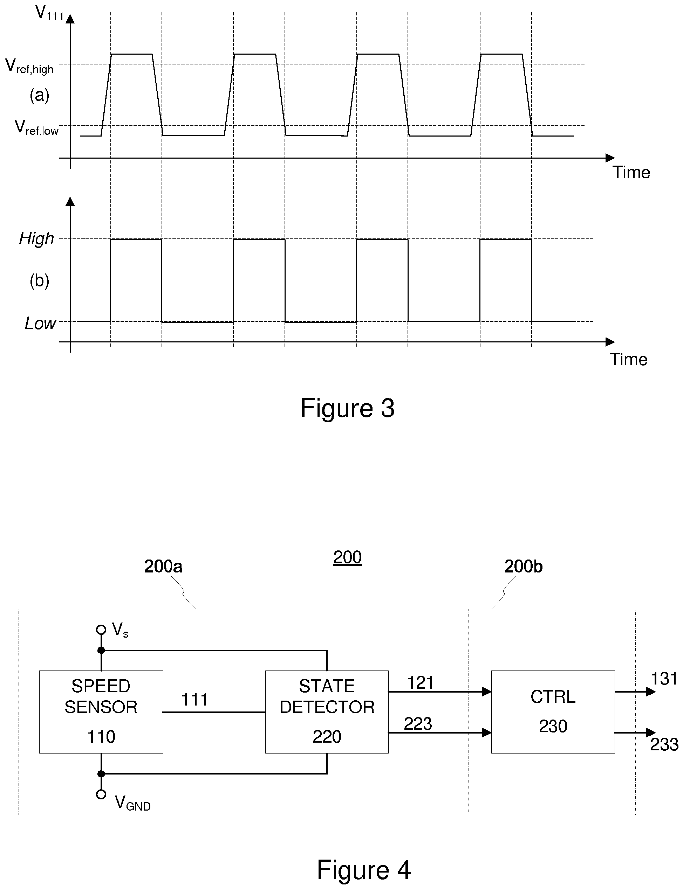

Figure 3 schematically illustrates the relationship between the signal voltage *V*₁₁₁ received at the state detector 120 and the pulse train derived in the controller 130 according to an example. In this regard, the illustration (a) depicts the signal voltage *V*₁₁₁ as a function of time, whereas the illustration (b) depicts the pulse train derivable based on the time series of state indications 121 derived from the signal voltage *V*₁₁₁ of the illustration (a). Hence the first and second comparators 122, 124, at least conceptually, serve to provide an edge detection functionality via providing the time series of state indications 121, which in turn enables computation of the rotation speed either directly based on respective frequencies of the raising edges and/or falling edges derivable based on the time series of state indications 121 or via derivation of the digital speed signal in the form of the pulse train, as described in the foregoing with references to the controller 130.

In the speed measurement circuit 100 a failure e.g. in electrical connection (for example due to a wire break) between the speed sensor 110 and the state detector 120 or within the state detector 120 typically results in the state indicator 120 indicating the low state or an undecided state. in the former scenario the controller 130 has no way of telling such error condition apart from the low state, whereas in the latter scenario the controller 130 may be able to deduce that a malfunction has occurred due to prolonged time period of the state controller 120 not indicating either the high state or the low state. Nevertheless, even if being able to detect an occurrence of such a malfunction, the controller 130 does not have any indication regarding possible type of the malfunction occurring in the state detector 120 and/or in electrical connections thereto.

Figure 4 schematically illustrates an improved speed measurement circuit 200 according to an example, (conceptually) divided into an analog subsystem 200a and a digital subsystem 200b. The speed measurement circuit 200 comprises the speed sensor 110, a state detector 220 and a controller 230. The speed sensor 110 is arranged to provide an analog electrical signal via the signal line 111 to the state detector 220, which is arranged to determine whether the electrical signal currently received thereat represents the high state or the low state and to issue a respective state indication 121 to the controller 230 to enable rotation speed calculation therein based on a time series of state indications 121. Moreover, the state detector 220 may be arranged to derive based on the electrical signal, a diagnostic signal 223 that is descriptive of at least one aspect of an operational state of the speed measurement circuit 200 (e.g. that of the analog subsystem 200a) for provision to the controller 230. The speed sensor 110 and the state detector 220 may be coupled to an operating voltage *V*ₛ and to a ground potential *V*_{GND}.

Characteristics of the electric signal conveyed via the signal line 111 are similar to those described in the foregoing in context of the speed measurement circuit 100, e.g. the electrical signal comprises an analog signal that is descriptive of rotation speed of a rotary component, e.g. rotation speed of a rotary component of a combustion engine, e.g. a crankshaft or a flywheel of the combustion engine, and it has a time-varying signal voltage *V*₁₁₁ that exhibits local maxima at a frequency that has a predefined relationship to the rotation speed of the combustion engine. This relationship is also known by the controller 230 and it depends on the number of measurement points included in the rotary component of the combustion engine speed of which is being measured by the speed measurement circuit 200, as described in the foregoing in context of the speed measurement circuit 100. The state detector 220 may be arranged to compare the signal voltage *V*₁₁₁ to the high reference voltage *V*_{ref,high} and to the low reference voltage *V*_{ref,low} and to issue the state indication 121 to the controller 230 in consideration of the signal voltage *V*₁₁₁ in view of the high and low reference voltages *V*_{ref,high}, *V*_{ref,low}, where the state indication indicates one of the high state or the low state.

As in case of the state detector 120, also the state indication 121 obtained from the state detector 220 may comprise the high state indication in response to the signal voltage *V*₁₁₁ exceeding the high reference voltage *V*_{ref,high} and it may comprise the low state indication in response to the signal voltage *V*₁₁₁ being smaller than the low reference voltage *V*_{ref,low}, whereas in case the signal voltage *V*₁₁₁ is between the high and low reference voltages *V*_{ref,high}, *V*_{ref,low}, the output of state detector 220 is undecided and it may be handled, for example, as described in the foregoing in context of the state detector 120.

The diagnostic signal 223 may convey a diagnostic value that is descriptive of the current operational state of the speed measurement circuit 200, which diagnostic value indicates one of a normal operational state of the speed measurement circuit 200 or an abnormal operational state of the speed measurement circuit 200. The state detector 200 may set or adjust the diagnostic value into a respective predefined value or into a value in a respective predefined value range in dependence of the signal voltage *V*₁₁₁. As an example in this regard, the diagnostic value may comprise a diagnostic voltage *V*_{d} that is set or adjusted to a predefined voltage or to a voltage within in a predefined voltage range in dependence of the signal voltage *V*₁₁₁. Consequently, the controller 230 is able to observe the operational state of the speed measurement circuit 200 based on a time-varying diagnostic value (e.g. a time-varying diagnostic voltage *V*_{d}) received as the diagnostic signal 223 from the state detector 220 and the controller 230 may compute the rotation speed in dependence of the diagnostic signal 223.

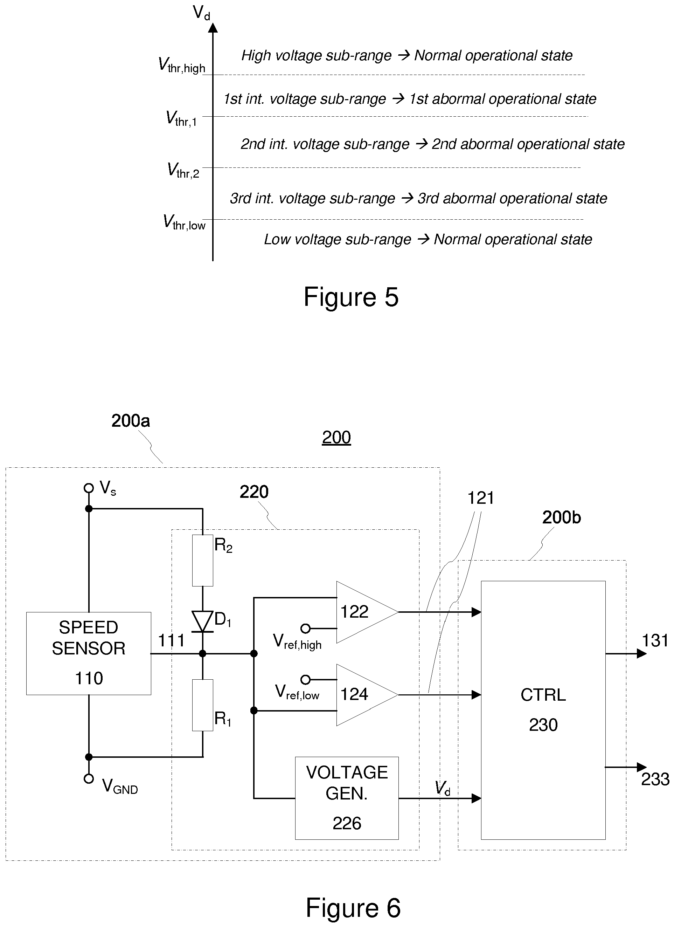

A non-limiting example in this regard is illustrated in Figure 5, where the diagnostic value is provided as the diagnostic voltage *V*_{d} and where the voltage range is divided into five diagnostic voltage sub-ranges by a high voltage threshold *V*_{thr,high}, a low voltage threshold *V*_{thr,low}, a first intermediate voltage threshold *V*_{thr,1} and a second intermediate voltage threshold *V*_{thr,2}. In this example, the diagnostic voltage *V*_{d} in a high diagnostic voltage sub-range above the high voltage threshold *V*_{thr,high} or in a low diagnostic voltage sub-range below the high voltage threshold *V*_{thr,high} indicates a normal operational state of the speed measurement circuit 200, whereas the diagnostic voltage *V*_{d} in a first intermediate diagnostic voltage sub-range between the high voltage threshold *V*_{thr,high} and the first intermediate voltage threshold *V*_{thr,1} indicates a first predefined abnormal operational state of the speed measurement circuit 200, the diagnostic voltage *V*_{d} in a second intermediate diagnostic voltage sub-range between the first and second intermediate voltage thresholds *V*_{thr,1}, *V*_{thr,2} indicates a second predefined abnormal operational state of the speed measurement circuit 200 and the diagnostic voltage *V*_{d} in a third intermediate diagnostic voltage sub-range between the second intermediate voltage threshold *V*_{thr,2} and the low voltage threshold *V*_{thr,low} indicates a third predefined abnormal operational state of the speed measurement circuit 200.

While the example of Figure 5 applies two intermediate voltage thresholds *V*_{thr,1}, *V*_{thr,2} and, consequently, three intermediate diagnostic voltage sub-ranges that each represent a respective one of the three (different) predefined abnormal operational states of the speed measurement circuit 200, in general the range of voltages between the high and low threshold voltages *V*_{thr,high}, *V*_{thr,low} may be divided by one or more intermediate voltage thresholds *V*_{thr,k} into respective two or more intermediate diagnostic voltage sub-ranges that each represent a respective one of two or more predefined abnormal operational states of the speed measurement circuit 200. Moreover, in a variation of the example which is not part of the invention described via references to Figure 5, there may be only a single intermediate diagnostic voltage sub-range that is associated with a predefined abnormal operational state of the speed measurement circuit 200. In such a scenario the intermediate voltage sub-range may be defined via two intermediate voltage thresholds *V*_{thr,1}, *V*_{thr,2} (with *V*_{thr,1} > *V*_{thr,2}) that define a limited sub-range of the range from *V*_{thr,low} to *V*_{thr,high}. Consequently, with the knowledge of the voltage thresholds *V*_{thr,high}, *V*_{thr,low}, *V*_{thr,k} the controller 230 is able to detect the operational state of the speed measurement circuit 200 based on the diagnostic voltage *V*_{d} received as the diagnostic signal 223 from the state detector 220.

According to an example, the diagnostic voltage *V*_{d} that serves to indicate a given (normal or abnormal) operational state of the speed measurement circuit 200 may be set or adjusted to any voltage within the diagnostic voltage sub-range that represents the given operational state, whereas in another example the diagnostic voltage *V*_{d} may be set or adjusted to a predefined voltage within the diagnostic voltage sub-range that represents the given operational state.

In the state detector 220, the signal voltage *V*₁₁₁ falling within a high signal voltage sub-range above the high reference voltage *V*_{ref,high} or within a low signal voltage sub-range below the low reference voltage *V*_{ref,low} serves as an indication of a normal operational state of the speed measurement circuit 200 and, consequently, the state detector 220 may be arranged to convert such signal voltages *V*₁₁₁, respectively, into a diagnostic voltage *V*_{d} that is within the high or low diagnostic voltage sub-range to indicate the normal operational state to the controller 230. On the other hand, instead of indicating one of the high state or the low state (and hence a normal operational state of the speed measurement circuit 200), the signal voltage *V*₁₁₁ may fall into a signal voltage sub-range that serves as an indication of a predefined abnormal operational state of the speed measurement circuit 200. In this regard, there may be one or more predefined signal voltage sub-ranges that are each associated with a respective abnormal operational state of the speed measurement circuit 200 and that are, consequently, each associated with the respective diagnostic voltage sub-range that represents the respective abnormal operational state of the speed measurement circuit 200. Consequently, the state detector 220 may be arranged to convert the signal voltage *V*₁₁₁ that falls within a predefined signal voltage sub-range that is associated with a respective abnormal operational state into a diagnostic voltage *V*_{d} that is within a diagnostic voltage sub-range that represents the respective abnormal operational state.

While the example described in the foregoing with references to the illustration of Figure 5 applies the diagnostic voltage *V*_{d} as an example of the diagnostic value, the example readily generalizes into diagnostic values of different type, *mutatis mutandis.*

Figure 6 schematically illustrates an implementation of the speed measurement circuit 200 according to an example. Therein, the state detector 220 comprises the first resistor *R*₁, a second resistor *R*₂ and a diode *D*₁, where the signal line 111 is coupled to the ground potential *V*_{GND} via the first resistor *R*₁ (as in the state detector 120) and where the operating voltage *V*ₛ is coupled to the signal line 111 via the second resists *R*₁ and, optionally, through the diode *D*₁. The coupling of the signal line 111 and the high and low reference voltages *V*_{ref,high}, *V*_{ref,low} to the first and second comparators 122, 124 is the same as described in the foregoing for the state detector 120. Moreover, the operation of the state detector 220 with respect to respective operation of the first and second comparators 122, 124 is the same as described in the foregoing for the state detector 120, the respective voltages provided from the respective outputs of the first and second comparators 122, 124 thereby serving as the state indication 121.

The state detector 220 further comprises a diagnostic voltage generator 226 that is arranged to generate, based on the signal voltage *V*₁₁₁, the diagnostic voltage *V*_{d} and to provide the diagnostic voltage *V*_{d} as the diagnostic signal 223 output from the state detector 220. Along the lines described in the foregoing, the diagnostic voltage generator 226 may be arranged to convert the signal voltage *V*₁₁₁ that falls within a predefined signal voltage sub-range that is associated with a respective abnormal operational state into a diagnostic voltage *V*_{d} that is within a diagnostic voltage sub-range that represents the respective abnormal operational state. Non-limiting examples of such signal voltage sub-ranges include the following:
1. a failed electrical connection between the ground potential *V*_{GND} and the speed sensor 110 may results in the signal voltage *V*₁₁₁ that is at or close to a first error voltage *V*_{err,1};
2. a failed electrical connection in the signal line 111 between the state detector 220 and the speed sensor 110 results in the signal voltage *V*₁₁₁ that is at or close to a second error voltage *V*_{err,2};
3. a failed electrical connection between the operating voltage *V*ₛ and the speed sensor 110 results in the signal voltage *V*₁₁₁ that is at or close to a third error voltage *V*_{err,3}.

The signal voltage *V*₁₁₁ may be considered to be close to a respective one of the error voltages *V*_{err,k} if it is within a predefined margin *M*ₑᵣᵣ from the respective error voltage Verr,k, i.e. Verr,k - Merr < Verr,k < Verr,k + Merr.

Assuming the exemplifying error voltages *V*_{err,1}, *V*_{err,2}, *V*_{err,3} and corresponding diagnostic voltage sub-ranges (or respective predefined voltages within the corresponding diagnostic voltage sub-ranges) defined for the diagnostic voltage *V*_{d} in the example of Figure 5, the diagnostic voltage generator 226 may be arranged to convert the signal voltage *V*₁₁₁ that is within the margin ±*M*ₑᵣᵣ from the first error voltage *V*_{err,1} into the diagnostic voltage *V*_{d} within the first intermediate diagnostic voltage sub-range, to convert the signal voltage *V*₁₁₁ that is within the margin ±*M*ₑᵣᵣ from the second error voltage *V*_{err,2} into the diagnostic voltage *V*_{d} within the second intermediate diagnostic voltage sub-range, and to convert the signal voltage *V*₁₁₁ that is within the margin ±*M*ₑᵣᵣ from the third error voltage *V*_{err,3} into the diagnostic voltage *V*_{d} within the third intermediate diagnostic voltage sub-range. Moreover, the diagnostic voltage generator 226 may be further arranged to convert the signal voltage *V*₁₁₁ that exceeds the high reference voltage *V*_{ref,high} into the diagnostic voltage *V*_{d} within the high diagnostic voltage sub-range and to convert the signal voltage *V*₁₁₁ that is below the low reference voltage *V*_{ref,low} into the diagnostic voltage *V*_{d} within the low diagnostic voltage sub-range.

In a non-limiting example, the speed sensor 110 may comprise a hall speed sensor, the operating voltage *V*_{d} may be 24.3 V (with the ground potential *V*_{GND} representing 0 V) and each of the first and second resistors *R*₁, *R*₂ may have resistance 5 kΩ. Consequently, the first error voltage *V*_{err,1} may be approximately 19.1 V, the second error voltage *V*_{err,2} may be approximately 12.0 V, the third error voltage *V*_{err,3} may be approximately 5.1 V and the margin *M*ₑᵣᵣ may be approximately 0.1 V, whereas the high reference voltage *V*_{ref,high} may be set to 21 V and the low reference voltage *V*_{ref,low} may be set to 3 V.

In an example, the diagnostic voltage generator 226 may be arranged to apply a linear conversion from the signal voltage *V*₁₁₁ to the diagnostic voltage *V*_{d}. Such linear conversion may involve scaling of the signal voltage *V*₁₁₁ by a predefined scaling factor to derive the corresponding diagnostic voltage *V*_{d}. In an example, the scaling factor is smaller than unity, the diagnostic voltage generator 226 hence serving to attenuate the signal voltage *V*₁₁₁ in order to derive the diagnostic voltage *V*_{d}, whereas in another example the scaling factor is larger than unity, the diagnostic voltage generator 226 hence serving to amplify the signal voltage *V*₁₁₁ in order to derive the diagnostic voltage *V*_{d}, Such scaling of the signal voltage *V*₁₁₁ in order to derive the diagnostic voltage *V*_{d}, may be provided to convert the signal voltage *V*₁₁₁ into a voltage range that is suitable for the controller 130. In a further example, the scaling factor is (substantially) unity, the diagnostic voltage generator 226 hence serving to pass the signal voltage *V*₁₁₁ as the diagnostic voltage *V*_{d},

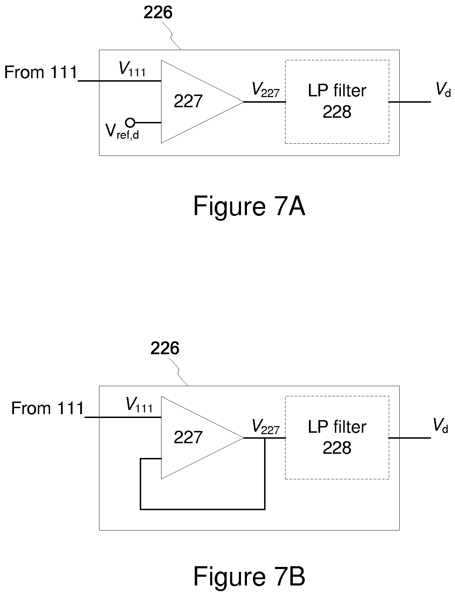

Figure 7A schematically illustrates some components of the diagnostic voltage generator 226 according to an example, comprising an amplifier 227 having the signal line 111 coupled to its first input terminal and the output of the amplifier 227 coupled to its second input terminal with the amplifier 227. The amplifier 227 may comprise a differential amplifier that is arranged to provide an output voltage *V*₂₂₇ that is derived as the difference between the respective voltages received at its first and second input terminals multiplied by the predefined scaling factor *g*_{d}, e.g. as *V*₂₂₇ = *g*_{d}(*V*₁₁₁ - *V*₂₂₇), which serves as a buffer with setting *g*_{d} = 1. Figure 7B schematically illustrates some components of the diagnostic voltage generator 226 according to another example, comprising the amplifier 227 having the signal line 111 coupled to its first input terminal and a diagnostic reference voltage *V*_{ref,d} coupled to its second input terminal. Along the lines of the example above, the amplifier 227 may comprise a differential amplifier that is arranged to provide an output voltage *V*₂₂₇ that is derived as the difference between the respective voltages received at its first and second input terminals multiplied by a predefined scaling factor *g*_{d}, e.g. as *V*₂₂₇ = *g*_{d}(*V*₁₁₁ - *V*_{ref,d}). In an example, the scaling factor *g*_{d} is larger than one and it may be referred to as a gain factor, whereas in another example the scaling factor *g*_{d} is smaller than one and it may be referred to as an attenuation factor.

The diagnostic voltage generator 226 may provide the output voltage *V*₂₂₇ as the diagnostic voltage *V*_{d} or, optionally (as shown in the respective illustrations of Figures 7A and 7B), the diagnostic voltage generator 226 may be arranged to apply a low pass filter 228 to the output voltage *V*₂₂₇ and provide the low-pass filtered output voltage as the diagnostic voltage *V*_{d}.

The parameters in the examples Figures 7A and 7B, i.e. the scaling factor *g*_{d} and the diagnostic reference voltage *V*_{ref,d} (if applicable) are selected, in view of respective characteristics of the first and second resistors *R*₁, *R*₂, the high and low reference voltages *V*_{ref,high}, *V*_{ref,low}, the applied speed sensor 110 and/or the applied operating voltage *V*ₛ such that a desired conversion from the signal voltage *V*₁₁₁ to the diagnostic voltage *V*_{d} is provided to ensure suitable handling of the diagnostic signal 223 in the controller 230.

Referring back to the speed measurement circuit 200, the controller 230 may be arranged to compute the rotation speed and possibly also construct the digital speed signal based on the state indications 121 obtained from the state detector 220 in dependence of the diagnostic signal 223. In this regard, the controller 230 may be arranged to determine, based on the diagnostic signal 223, whether the operational state of the speed measurement circuit 200 is normal or abnormal: in case the diagnostic signal 223 indicates the normal operational state, the controller 230 may proceed into computing the rotation speed and providing the speed indication 131 to indicate the computed rotation speed as described in the foregoing in context of the controller 130, whereas in case the diagnostic signal indicates an abnormal operational state, the controller 230 may issue an operational status indication 233 pertaining to an abnormal operational state of speed measurement circuit 200 identified based on the diagnostic signal 223. In case of an abnormal operational state, the controller 230 may, optionally, refrain from computing the rotation speed and/or providing the speed indication 131 due to possible malfunction appearing in the speed measurement circuit 200. Moreover, in case of the normal operational state, the controller 230 may optionally issue the operational status indication 233 as one pertaining to the normal operational state of the speed measurement circuit 200.

Along the lines described in the foregoing, the diagnostic signal 223 may be arranged to indicate one of one or more predefined abnormal operational states of the speed measurement circuit 200, such that the diagnostic value conveyed by the diagnostic signal 223, e.g. the diagnostic voltage *V*_{d}, identifies the abnormal operational state. The abnormal operational states may involve two types thereof: in a first type of abnormal operational states the state indications 121 obtained from the state detector 220 (and/or the digital speed signal derived therefrom) indicate presence of one or more pulses or a pulse train but the diagnostic value conveyed by the diagnostic signal 223 reveals a failure in operation of the state detector 220 (e.g. a failed electrical connection therein or thereto), whereas in a second type of abnormal operational states the state indications 121 obtained from the state detector 220 (and/or the digital speed signal derived therefrom) do not indicate presence of a pulse train (which already serves as an indication of malfunction in the state detector 220) while the diagnostic value conveyed by the diagnostic signal 223 further confirms the failure in (e.g. electrical connections to or within) the state detector 220.

As described in the foregoing, the diagnostic signal 223 may provide the controller 230 with a time series of diagnostic values (e.g. one derived based on the time-varying diagnostic voltage *V*_{d}) that is descriptive of the operational state of speed measurement circuit 200 as a function of time and, consequently, the controller 230 may derive the operational status indication 233 based on one or more diagnostic values received in the diagnostic signal 223 (e.g. based on the diagnostic voltage *V*_{d} at a given time instant or during a given time segment). The controller 230 may be arranged to derive the operational status indication 223 based on a time segment of the diagnostic signal 223 (e.g. based on the diagnostic voltage *V*_{d} or changes therein during the time segment) having at least a predefined duration. This may facilitate avoiding unintentionally considering time periods during which the signal voltage *V*₁₁₁ increases from the low reference voltage *V*_{ref,low} to the high reference voltage *V*_{ref,high} or time periods during which the signal voltage *V*₁₁₁ decreases from the high reference voltage *V*_{ref,high} to the low reference voltage *V*_{ref,low} that periodically occur during normal operational state of the speed measurement circuit 200 as an indication of an abnormal operational state.

Depending on characteristics of the diagnostic signal 223 received at the controller 230, the operational status indication 233 may comprise one of an indication of normal operational state of the speed measurement circuit 200 or an indication of abnormal operational state of the speed measurement circuit 200. Moreover, in case the operational status indication 233 reports abnormal operational state, the operational status indication 233 may further comprise an indication concerning characteristics of the abnormal operational state of the speed measurement circuit 200 derivable at the controller 230 based on the diagnostic signal 223, e.g. based on known predefined mapping between diagnostic values (e.g. diagnostic voltages *V*_{d}) and value ranges (e.g. the diagnostic voltage sub-ranges) corresponding to the abnormal operational states of the speed measurement circuit 200.

The operational status indication 233 issued by the controller 230 may be provided, for example, to a system controller to enable continuous monitoring of operation of the combustion engine, rotation speed of which the speed measurement circuit 200 serves to measure. The system controller, in turn, may respond to an abnormal operational state of the speed measurement circuit 200 indicated via the operational status indication 233 by showing an alert or warning in this regard via a user interface (UI) and/or by storing an indication in this regard in a memory. The alert/warning shown via the UI and/or the indication stored in the memory may indicate presence of an abnormal operational state of the speed measurement circuit 200 and it may further comprise the indication concerning characteristics of the abnormal operational state of the speed measurement circuit 200.

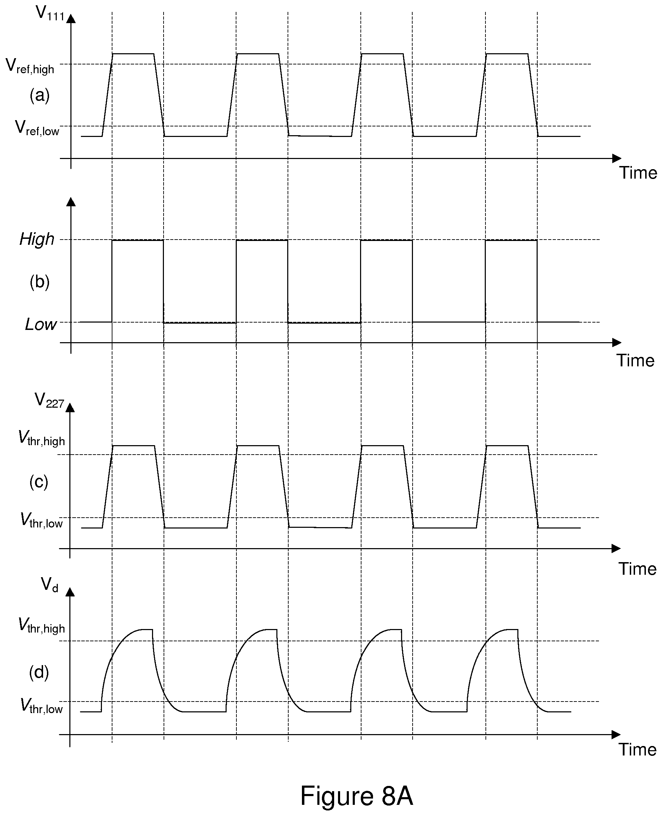

Figure 8A schematically illustrates the relationship between the signal voltage *V*₁₁₁ received at the state detector 220, the pulse train derived in the controller 230, the output voltage *V*₂₂₇ of the amplifier 227, and the diagnostic voltage *V*_{d} at the output of the (optional) low pass filter 228 according to an example. Herein, the illustrations (a) and (b) are the same ones already described with references to Figure 3. The illustration (c) depicts the output voltage *V*₂₂₇ of the amplifier 227 as a function of time, whereas the illustration (d) depicts the diagnostic voltage *V*_{d} as a function of time, where the diagnostic voltage *V*_{d} is obtained by low pass filtering the output voltage *V*₂₂₇. Hence, the output voltage *V*₂₂₇ (and the diagnostic voltage *V*_{d}) follows the envelope of the signal voltage *V*₁₁₁, while the amplitude may be different due to scaling that may take place in the diagnostic voltage generator 226.

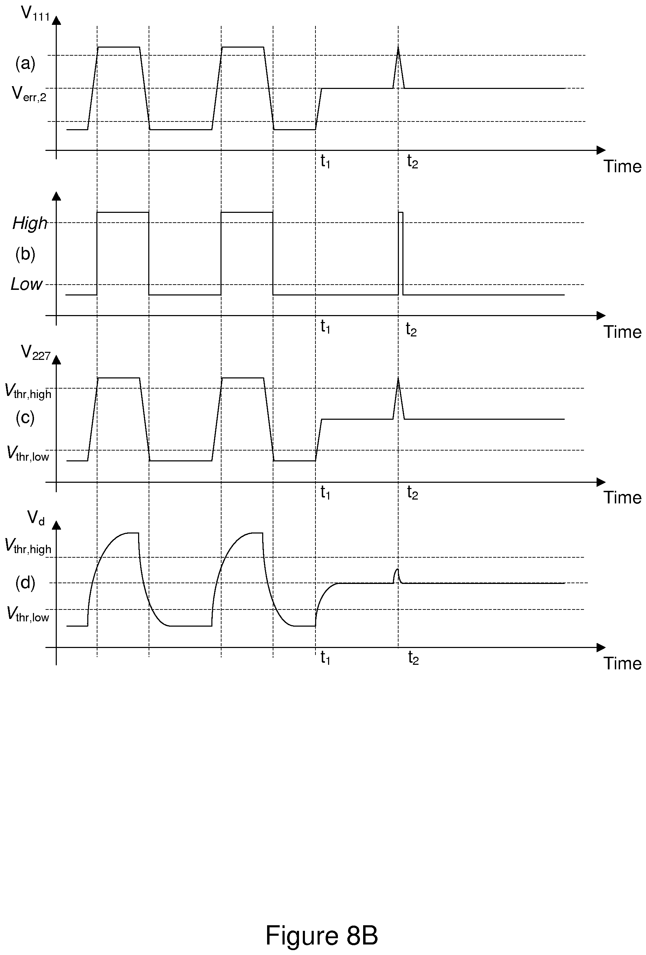

Figure 8B schematically illustrates the relationship between the signal voltage *V*₁₁₁ received at the state detector 220 (the illustration (a)), the pulse train derived in the controller 230 (the illustration (b)), the output voltage *V*₂₂₇ of the amplifier 227 (the illustration (c)), and the diagnostic voltage *V*_{d} at the output of the (optional) low pass filter 228 (the illustration (d)) according to another example. Therein, the first two pulses are similar to those of the corresponding illustrations of Figure 8A, whereas after the second pulse (at time instant *t*₁) a failure occurs in the speed measurement circuit 200, leading to a situation where the signal voltage *V*₁₁₁ is set to the voltage *V*_{err,2} and, consequently, resulting in the output voltage *V*₂₂₇ substantially immediately following the change in the signal voltage *V*₁₁₁ (possibly at different amplitude) and the diagnostic voltage *V*_{d} following the change in the signal voltage *V*₁₁₁ (possibly at different amplitude) with a delay arising from operation of the low pass filter 228. Referring to the example described in the foregoing, this may serve as an indication of a failed electrical connection in the signal line 111 between the state detector 220 and the speed sensor 110 occurring at the time instant *t*₁. Furthermore, at time instant *t*₂ there is a momentary increase in the signal voltage *V*₁₁₁, which may be caused for example by structural vibrations etc. momentarily restoring the electrical connection in the signal line 111 between the state detector 220 and the speed sensor 110. This may result in a short pulse in the pulse train derived in the controller 230 and result in the output voltage *V*₂₂₇ substantially immediately following the change in the signal voltage *V*₁₁₁ (possibly at different amplitude). On the other hand, due to delay arising from operation of the low pass filter 228, the diagnostic voltage *V*_{d} exhibits only a small change following the change in the signal voltage *V*₁₁₁ (possibly at different amplitude) but failing to reach voltage level that corresponds to the high state of the signal voltage *V*₁₁₁. Hence, the controller 230 is able to observe the following aspects from the output voltage *V*₂₂₇ (if provided as the diagnostic voltage *V*_{d}) and/or the from the diagnostic voltage *V*_{d}:
- The 'baseline' of the output voltage *V*₂₂₇ (and/or the diagnostic voltage *V*_{d}) is set to a level that represents the second predefined abnormal operational state of the speed measurement circuit 200;
- The short-term voltage increase at the time instant *t*₂ does not represent a pulse of the pulse train but rather indicates a random short-term restoration of the condition that resulted in the second predefined abnormal operational state of the speed measurement circuit 200.

The controller 230 may be provided as an electrical circuit arranged to carry out the functionality described in the foregoing for the controller 230, by a processor provided with program instructions that cause the processor to carry out the functionality described in the foregoing for the controller 230, or by a combination of the two. Herein, the reference(s) to a processor should not be understood to encompass only programmable processors, but also dedicated circuits such as field-programmable gate arrays (FPGA), application specific circuits (ASIC), etc.

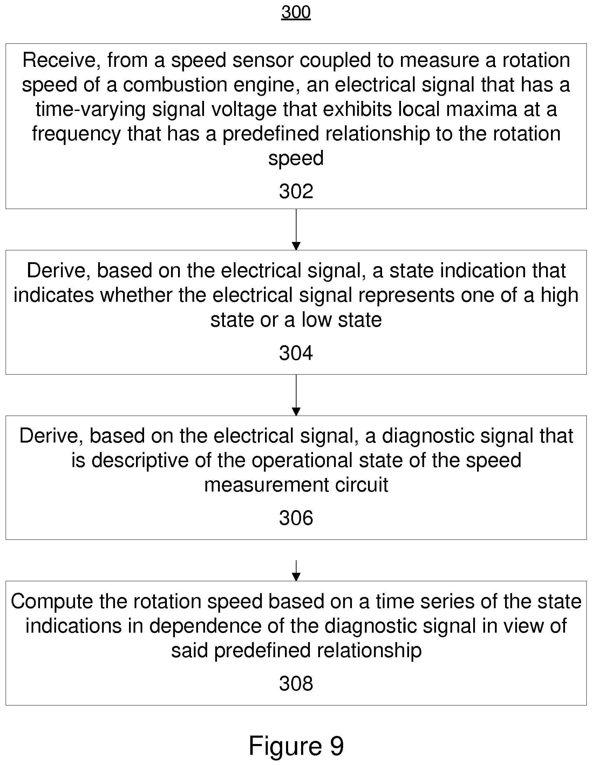

In the foregoing, various aspects related to operation of the speed measurement circuit 200 are described with references to the state detector 220 and/or to the controller 230. These aspects of operation may be, alternatively, provided and/or described as steps of a respective method. As non-limiting examples in this regard, Figure 9 depicts a flowchart that illustrates steps of a method 300 that may be implemented by one or more circuits or apparatuses in order to provide the functionality described in the foregoing with references to the state detector 220 and/or to the controller 230. The method 300 may be varied in a number of ways, for example in accordance with the examples described in the foregoing and/or in the following.

The method 300 serves to measure a rotation speed of a combustion engine and it proceeds from receiving, from the speed sensor 110 coupled to measure the rotation speed of the combustion engine, an electrical signal that has a time-varying signal voltage *V*₁₁₁ that exhibits local maxima at a frequency that has a predefined relationship to the rotation speed, as indicated in block 302. The method 300 further comprises deriving, based on the electrical signal, the state indication 121 that indicates whether the electrical signal represents one of a high state or a low state, as indicated in block 304, and deriving, based on the electrical signal, the diagnostic signal 223 that is descriptive of the operational state of the speed measurement circuit 220, as indicated in block 306. The method 300 further comprises deriving the rotation speed based on a time series of the state indications 121 in dependence of the diagnostic signal 223 in view of said predefined relationship, as indicated in block 308.

Since the speed measurement circuit 200 and the method 300 serve to provide the state indication 121 separately from the diagnostic signal 223, it enables fast and accurate detection of the high/low state of the electrical signal received from the speed sensor 110 via the signal line 111 to enable calculation of the rotation speed in the controller 230 without a delay while at the same time providing diagnostics that enables identifying predefined failure conditions of the speed measurement circuit 200 in the course of its operation, thereby facilitating timely detection of incorrect speed measurement and an underlying failure condition.

## Claims

1. A speed measurement circuit (200) for measuring a rotation speed of a combustion engine, the speed measurement circuit (200) comprising:
a state detector (220) coupled between an operating voltage (*V*ₛ) and a ground potential (*V*_{GND}) and coupled to receive, from a speed sensor (110), an electrical signal that has a time-varying signal voltage (*V*₁₁₁) that exhibits local maxima at a frequency that has a predefined relationship to the rotation speed, wherein the state detector (220) is arranged to derive, based on the electrical signal,
a state indication (121) that indicates whether the electrical signal represents one of a high state or a low state, and
a diagnostic signal (223) that is descriptive of the operational state of the speed measurement circuit (220), wherein the diagnostic signal (223) conveys a diagnostic value that is descriptive of current operational state of the speed measurement circuit (200), wherein current operational state is one of a normal operational state or an abnormal operational state and wherein the state detector (220) is arranged to derive the diagnostic value based on the signal voltage (*V*₁₁₁) of the electrical signal; and
**characterized in that** the speed measurement circuit (200) comprises a controller (230) coupled to receive the state indications (121) and the diagnostic signal (223) and arranged to compute the rotation speed based on a time series of the state indications (121) in dependence of the diagnostic signal (223) in view of said predefined relationship,
wherein the state detector (220) has defined therefor:
two or more predefined signal voltage sub-ranges, each associated with a respective abnormal operational state of the speed measurement circuit (200), and
two or more predefined intermediate diagnostic voltage sub-ranges, each representing a respective abnormal operational state of the speed measurement circuit (200).

2. A speed measurement circuit (200) according to claim 1, wherein the diagnostic value indicates one of the following:
a normal operational state of the speed measurement circuit (200),
one of two or more predefined abnormal operational states of the speed measurement circuit (200).

3. A speed measurement circuit (200) according to claim 1 or 2, wherein the state detector (220) is arranged to convert the signal voltage (*V*₁₁₁) that falls within a predefined signal voltage sub-range associated with a respective abnormal operational state into a diagnostic value that is within a predefined intermediate diagnostic voltage sub-range representing the respective abnormal operational state.

4. A speed measurement circuit (200) according to any of claims 1 to 3, wherein the state detector (220) has defined therefor:
a high signal voltage sub-range that is associated with a normal operational state of the speed measurement circuit (200) and a high diagnostic voltage sub-range that represents the normal operational state of the speed measurement circuit (200),
a low signal voltage sub-range that is associated with the normal operational state of the speed measurement circuit (200) and a low diagnostic voltage sub-range that represents the normal operational state of the speed measurement circuit (200).

5. A speed measurement circuit (200) according to claim 4, wherein the state detector (220) is arranged to convert the signal voltage (*V*₁₁₁) that falls within a predefined signal voltage sub-range associated with a normal operational state into a diagnostic value that is within a diagnostic voltage sub-range representing the normal operational state.

6. A speed measurement circuit (200) according to claim 1 or 5, wherein the diagnostic value comprises a diagnostic voltage (*V*_{d}) and wherein the state detector (220) comprises a diagnostic voltage generator (226) arranged to derive the diagnostic voltage (*V*_{d}) on basis of the current signal voltage (*V*₁₁₁) of the electrical signal.

7. A speed measurement circuit (200) according to claim 6, wherein the diagnostic voltage generator (226) comprises amplifier (227) for scaling electrical signal to derive the diagnostic signal (223).

8. A speed measurement circuit (200) according to claim 7, wherein the diagnostic voltage generator (226) comprises a low-pass filter (228) for filtering the scaled electrical signal obtained from the amplifier (227).

9. A speed measurement circuit (200) according to any of claims 1 to 8 wherein the abnormal operational states of the speed measurement circuit (200) comprise one or more of the following:
a first abnormal operational state that represents a failed electrical connection between the ground potential (*V*_{GND}) and the speed sensor (110),
a second abnormal operational state that represents a failed electrical connection between the state detector (220) and the speed sensor (110),
a third abnormal operational state that represents a failed electrical connection between the operating voltage (*V*ₛ) and the speed sensor (110),

10. A speed measurement circuit (200) according to any of claims 1 to 9, wherein the controller (230) is arranged to carry out at least one of the following:
provide a speed indication (131) in response to the diagnostic signal (223) indicating a normal operational state of the speed measurement circuit (200),
refrain from providing the speed indication (131) in response to the diagnostic signal (223) indicating an abnormal operational state of the speed measurement circuit (200).

11. A speed measurement circuit (200) according to claim 10, wherein computing the rotation speed includes one of the following:
computing the rotation speed based on a respective frequency of changes from the high state to the low state and/or from low state to the high state indicated in said time series of state indications (121) in view of said predefined relationship,
deriving a digital speed signal that comprises a pulse train derived based on the time series of state indications (121) and compute the rotation speed based on a pulse frequency of the pulse train in view of said predefined relationship.

12. A speed measurement circuit (200) according to any of claims 1 to 11, wherein the controller (230) is arranged to carry out at least one of the following:
derive an operational status indication (233) that indicates a normal operational state of the speed measurement circuit (200) in response to the diagnostic signal (223) indicating a normal operational state of the speed measurement circuit (200),
derive an operational status indication (233) that indicates an abnormal operational state of the speed measurement circuit (200) and identifies an abnormal operational states indicated by the diagnostic signal (223) in response to the diagnostic signal (223) indicating an anormal operational state of the speed measurement circuit (200).

13. A method (300) for measuring a rotation speed of a combustion engine via usage of a speed measurement circuit (300), the method (300) comprising:
receiving (302), from a speed sensor (110) coupled to measure the rotation speed, an electrical signal that has a time-varying signal voltage (*V*₁₁₁) that exhibits local maxima at a frequency that has a predefined relationship to the rotation speed;
deriving (304), based on the electrical signal, a state indication (121) that indicates whether the electrical signal represents one of a high state or a low state;
deriving (306), based on the electrical signal, a diagnostic signal (223) that is descriptive of the operational state of the speed measurement circuit (220), wherein the diagnostic signal (223) conveys a diagnostic value that is descriptive of current operational state of the speed measurement circuit (200), wherein current operational state is one of a normal operational state or an abnormal operational state and wherein the diagnostic value is derived based on the signal voltage (*V*₁₁₁) of the electrical signal; and
**characterized in that** the method (300) comprises deriving (308) the rotation speed based on a time series of the state indications (121) in dependence of the diagnostic signal (223) in view of said predefined relationship, wherein the diagnostic value is derived via application of the following:
two or more predefined signal voltage sub-ranges, each associated with a respective abnormal operational state of the speed measurement circuit (200), and
two or more predefined intermediate diagnostic voltage sub-ranges, each representing a respective abnormal operational state of the speed measurement circuit (200).

## Patentansprüche

1. Drehzahlmessschaltung (200) zum Messen einer Drehzahl eines Verbrennungsmotors, wobei die Drehzahlmessschaltung (200) Folgendes umfasst:
einen Zustandsdetektor (220), der zwischen einer Betriebsspannung (*V*ₛ) und einem Erdungspotential (*V*_{GND}) gekoppelt ist und gekoppelt ist, um von einem Drehzahlsensor (110) ein elektrisches Signal zu empfangen, das eine zeitabhängige Signalspannung (*V*₁₁₁) aufweist, die lokale Maxima bei einer Frequenz aufweist, die eine vordefinierte Beziehung zur Drehzahl hat, wobei der Zustandsdetektor (220) angeordnet ist, um basierend auf dem elektrischen Signal Folgendes abzuleiten,
eine Zustandsanzeige (121), die angibt, ob das elektrische Signal einen hohen oder einen niedrigen Zustand darstellt, und
ein Diagnosesignal (223), das den Betriebszustand der Drehzahlmessschaltung (220) beschreibt, wobei das Diagnosesignal (223) einen Diagnosewert übermittelt, der den aktuellen Betriebszustand der Drehzahlmessschaltung (200) beschreibt, wobei der aktuelle Betriebszustand ein normaler oder ein abnormaler Betriebszustand ist und wobei der Zustandsdetektor (220) so angeordnet ist, dass er den Diagnosewert basierend auf der Signalspannung (*V*₁₁₁) des elektrischen Signals ableitet; und
**dadurch gekennzeichnet, dass** die Drehzahlmessschaltung (200) einen Controller (230) umfasst, der gekoppelt ist, um die Zustandsanzeigen (121) und das Diagnosesignal (223) zu empfangen, und der angeordnet ist, um die Drehzahl basierend auf einer Zeitreihe der Zustandsanzeigen (121) in Abhängigkeit des Diagnosesignals (223) im Hinblick auf die vordefinierte Beziehung zu berechnen,
wobei der Zustandsdetektor (220) dafür definiert hat:
zwei oder mehr vordefinierte Signalspannungsunterbereiche, die jeweils einem jeweiligen abnormalen Betriebszustand der Drehzahlmessschaltung (200) zugeordnet sind, und
zwei oder mehr vordefinierte Zwischendiagnosespannungsunterbereiche, die jeweils einen jeweiligen abnormalen Betriebszustand der Drehzahlmessschaltung (200) darstellen.

2. Drehzahlmessschaltung (200) nach Anspruch 1, wobei der Diagnosewert eines der folgenden anzeigt:
einen normalen Betriebszustand der Drehzahlmessschaltung (200),
einen von zwei oder mehr vordefinierten abnormalen Betriebszuständen der Drehzahlmessschaltung (200).

3. Drehzahlmessschaltung (200) nach Anspruch 1 oder 2, wobei der Zustandsdetektor (220) dazu eingerichtet ist, die Signalspannung (*V*₁₁₁), die in einen vordefinierten Signalspannungsunterbereich fällt, der einem jeweiligen anormalen Betriebszustand zugeordnet ist, in einen Diagnosewert umzuwandeln, der in einem vordefinierten Zwischendiagnosespannungsunterbereich liegt, der den jeweiligen anormalen Betriebszustand darstellt.

4. Drehzahlmessschaltung (200) nach einem der Ansprüche 1 bis 3, wobei der Zustandsdetektor (220) dafür definiert hat:
einen hohen Signalspannungsunterbereich, der mit einem normalen Betriebszustand der Drehzahlmessschaltung (200) verbunden ist, und einen hohen Diagnosespannungsunterbereich, der den normalen Betriebszustand der Drehzahlmessschaltung (200) darstellt,
einen niedrigen Signalspannungsunterbereich, der mit dem normalen Betriebszustand der Drehzahlmessschaltung (200) verbunden ist, und einen niedrigen Diagnosespannungsunterbereich, der den normalen Betriebszustand der Drehzahlmessschaltung (200) darstellt.

5. Drehzahlmessschaltung (200) nach Anspruch 4, wobei der Zustandsdetektor (220) dazu eingerichtet ist, die Signalspannung (*V*₁₁₁), die in einen vordefinierten Signalspannungsunterbereich fällt, der einem normalen Betriebszustand zugeordnet ist, in einen Diagnosewert umzuwandeln, der innerhalb eines Diagnosespannungsunterbereichs liegt, der den normalen Betriebszustand darstellt.

6. Drehzahlmessschaltung (200) nach Anspruch 1 oder 5, wobei der Diagnosewert eine Diagnosespannung (*V*_{d}) umfasst und wobei der Zustandsdetektor (220) einen Diagnosespannungsgenerator (226) umfasst, der dazu eingerichtet ist, die Diagnosespannung (*V*_{d}) auf Grundlage der aktuellen Signalspannung (*V*₁₁₁) des elektrischen Signals abzuleiten.

7. Drehzahlmessschaltung (200) nach Anspruch 6, wobei der Diagnosespannungsgenerator (226) einen Verstärker (227) zum Skalieren des elektrischen Signals zum Ableiten des Diagnosesignals (223) umfasst.

8. Drehzahlmessschaltung (200) nach Anspruch 7, wobei der Diagnosespannungsgenerator (226) einen Tiefpassfilter (228) zum Filtern des skalierten elektrischen Signals umfasst, das vom Verstärker (227) erhalten wird.

9. Drehzahlmessschaltung (200) nach einem der Ansprüche 1 bis 8, wobei die anormalen Betriebszustände der Drehzahlmessschaltung (200) einen oder mehrere der folgenden umfassen:
einen ersten anormalen Betriebszustand, der eine fehlerhafte elektrische Verbindung zwischen dem Erdpotential (*V*_{GND}) und dem Drehzahlsensor (110) darstellt,
einen zweiten anormalen Betriebszustand, der eine fehlerhafte elektrische Verbindung zwischen dem Zustandsdetektor (220) und dem Drehzahlsensor (110) darstellt,
einen dritten anormalen Betriebszustand, der eine fehlerhafte elektrische Verbindung zwischen der Betriebsspannung (*V*ₛ) und dem Drehzahlsensor (110) darstellt,

10. Drehzahlmessschaltung (200) nach einem der Ansprüche 1 bis 9, wobei die Steuerung (230) dazu eingerichtet ist, mindestens eine der folgenden auszuführen:
Bereitstellen einer Geschwindigkeitsanzeige (131) als Reaktion auf das Diagnosesignal (223), das einen normalen Betriebszustand der Drehzahlmessschaltung (200) anzeigt,
Unterlassen der Bereitstellung der Geschwindigkeitsanzeige (131) als Reaktion auf das Diagnosesignal (223), das einen abnormalen Betriebszustand der Drehzahlmessschaltung (200) anzeigt.

11. Drehzahlmessschaltung (200) nach Anspruch 10, wobei das Berechnen der Drehzahl einen der folgenden umfasst:
Berechnen der Drehzahl basierend auf einer jeweiligen Frequenz von Änderungen vom hohen Zustand zum niedrigen Zustand und/oder vom niedrigen Zustand zum hohen Zustand, die in der Zeitreihe von Zustandsanzeigen (121) im Hinblick auf die vordefinierte Beziehung angegeben sind,
Ableiten eines digitalen Drehzahlsignals, das eine Impulsfolge umfasst, die basierend auf der Zeitreihe von Zustandsanzeigen (121) abgeleitet ist, und
Berechnen der Drehzahl basierend auf einer Impulsfrequenz der Impulsfolge im Hinblick auf die vordefinierte Beziehung.

12. Drehzahlmessschaltung (200) nach einem der Ansprüche 1 bis 11, wobei die Steuerung (230) so angeordnet ist, dass sie mindestens eine der folgenden ausführt:
Ableiten einer Betriebsstatusanzeige (233), die einen normalen Betriebszustand der Drehzahlmessschaltung (200) anzeigt, als Reaktion auf das Diagnosesignal (223), das einen normalen Betriebszustand der Drehzahlmessschaltung (200) anzeigt,
Ableiten einer Betriebsstatusanzeige (233), die einen abnormalen Betriebszustand der Drehzahlmessschaltung (200) anzeigt, und Identifizieren eines abnormalen Betriebszustands, der durch das Diagnosesignal (223) angezeigt wird, als Reaktion auf das Diagnosesignal (223), das einen abnormalen Betriebszustand der Drehzahlmessschaltung (200) anzeigt.

13. Verfahren (300) zum Messen einer Drehzahl eines Verbrennungsmotors durch Verwendung einer Drehzahlmessschaltung (300), wobei das Verfahren (300) Folgendes umfasst:
Empfangen (302) eines elektrischen Signals von einem Drehzahlsensor (110), der zum Messen der Drehzahl gekoppelt ist, mit einer zeitlich variierenden Signalspannung (*V*₁₁₁), die lokale Maxima bei einer Frequenz aufweist, die in einer vordefinierten Beziehung zur Drehzahl steht;
Ableiten (304) einer Zustandsanzeige (121), basierend auf dem elektrischen Signal, die angibt, ob das elektrische Signal einen hohen oder einen niedrigen Zustand darstellt;
Ableiten (306) eines Diagnosesignals (223), basierend auf dem elektrischen Signal, das den Betriebszustand der Drehzahlmessschaltung (220) beschreibt, wobei das Diagnosesignal (223) einen Diagnosewert übermittelt,
der den aktuellen Betriebszustand der Drehzahlmessschaltung (200) beschreibt, wobei der aktuelle Betriebszustand ein normaler oder ein abnormaler Betriebszustand ist und wobei der Diagnosewert basierend auf der Signalspannung (*V*₁₁₁) des elektrischen Signals abgeleitet wird; und
**dadurch gekennzeichnet, dass** das Verfahren (300) das Ableiten (308) der Drehzahl auf der Grundlage einer Zeitreihe der Zustandsanzeigen (121) in Abhängigkeit des Diagnosesignals (223) im Hinblick auf die vordefinierte Beziehung umfasst,
wobei der Diagnosewert durch Anwendung des Folgenden abgeleitet wird:
zwei oder mehr vordefinierte Signalspannungsunterbereiche, die jeweils einem jeweiligen abnormalen Betriebszustand der Drehzahlmessschaltung (200) zugeordnet sind, und
zwei oder mehr vordefinierte Zwischendiagnosespannungsunterbereiche, die jeweils einen jeweiligen abnormalen Betriebszustand der Drehzahlmessschaltung (200) darstellen.

## Revendications

1. Circuit de mesure de vitesse (200) pour mesurer une vitesse de rotation d'un moteur à combustion, le circuit de mesure de vitesse (200) comprenant :
un détecteur d'état (220) couplé entre une tension de fonctionnement (*V*ₛ) et un potentiel de masse (*V*_{GND}) et couplé pour recevoir, d'un capteur de vitesse (110), un signal électrique qui a une tension de signal variable dans le temps (*V*₁₁₁) qui présente des maxima locaux à une fréquence qui a une relation prédéfinie avec la vitesse de rotation, dans lequel le détecteur d'état (220) est agencé pour dériver, sur la base du signal électrique,
une indication d'état (121) qui indique si le signal électrique représente un état haut ou un état bas, et
un signal de diagnostic (223) qui décrit l'état de fonctionnement du circuit de mesure de vitesse (220), dans lequel le signal de diagnostic (223) transmet une valeur de diagnostic qui décrit l'état de fonctionnement actuel du circuit de mesure de vitesse (200), dans lequel l'état de fonctionnement actuel est l'un d'un état de fonctionnement normal ou d'un état de fonctionnement anormal et le détecteur d'état (220) est agencé pour dériver la valeur de diagnostic sur la base de la tension de signal (*V*₁₁₁) du signal électrique ; et
**caractérisé en ce que** le circuit de mesure de vitesse (200) comprend un dispositif de commande (230) couplé pour recevoir les indications d'état (121) et le signal de diagnostic (223) et agencé pour calculer la vitesse de rotation sur la base d'une série temporelle des indications d'état (121) en fonction du signal de diagnostic (223) au vu de ladite relation prédéfinie,
dans lequel le détecteur d'état (220) a défini à cet effet :
deux ou plusieurs sous-plages de tension de signal prédéfinies, chacune associée à un état de fonctionnement anormal respectif du circuit de mesure de vitesse (200), et
deux ou plusieurs sous-plages de tension de diagnostic intermédiaires prédéfinies, chacune représentant un état de fonctionnement anormal respectif du circuit de mesure de vitesse (200).

2. Circuit de mesure de vitesse (200) selon la revendication 1, dans lequel la valeur de diagnostic indique l'un des éléments suivants :
un état de fonctionnement normal du circuit de mesure de vitesse (200),
l'un des deux ou plusieurs états de fonctionnement anormaux prédéfinis du circuit de mesure de vitesse (200).

3. Circuit de mesure de vitesse (200) selon la revendication 1 ou 2, dans lequel le détecteur d'état (220) est agencé pour convertir la tension de signal (*V*₁₁₁) qui se situe dans une sous-plage de tension de signal prédéfinie associée à un état de fonctionnement anormal respectif en une valeur de diagnostic qui se situe dans une sous-plage de tension de diagnostic intermédiaire prédéfinie représentant l'état de fonctionnement anormal respectif.

4. Circuit de mesure de vitesse (200) selon l'une quelconque des revendications 1 à 3, dans lequel le détecteur d'état (220) a pour cela défini :
une sous-plage de tension de signal élevée qui est associée à un état de fonctionnement normal du circuit de mesure de vitesse (200) et une sous-plage de tension de diagnostic élevée qui représente l'état de fonctionnement normal du circuit de mesure de vitesse (200),
une sous-plage de tension de signal faible qui est associée à l'état de fonctionnement normal du circuit de mesure de vitesse (200) et une sous-plage de tension de diagnostic faible qui représente l'état de fonctionnement normal du circuit de mesure de vitesse (200).

5. Circuit de mesure de vitesse (200) selon la revendication 4, dans lequel le détecteur d'état (220) est agencé pour convertir la tension de signal (*V*₁₁₁) qui se situe dans une sous-plage de tension de signal prédéfinie associée à un état de fonctionnement normal en une valeur de diagnostic qui se situe dans une sous-plage de tension de diagnostic représentant l'état de fonctionnement normal.

6. Circuit de mesure de vitesse (200) selon la revendication 1 ou 5, dans lequel la valeur de diagnostic comprend une tension de diagnostic (*V*_{d}) et dans lequel le détecteur d'état (220) comprend un générateur de tension de diagnostic (226) agencé pour dériver la tension de diagnostic (*V*_{d}) sur la base de la tension de signal actuel (*V*₁₁₁) du signal électrique.

7. Circuit de mesure de vitesse (200) selon la revendication 6, dans lequel le générateur de tension de diagnostic (226) comprend un amplificateur (227) pour mettre à l'échelle le signal électrique afin de dériver le signal de diagnostic (223).

8. Circuit de mesure de vitesse (200) selon la revendication 7, dans lequel le générateur de tension de diagnostic (226) comprend un filtre passe-bas (228) pour filtrer le signal électrique mis à l'échelle obtenu à partir de l'amplificateur (227).

9. Circuit de mesure de vitesse (200) selon l'une quelconque des revendications 1 à 8, dans lequel les états de fonctionnement anormaux du circuit de mesure de vitesse (200) comprennent un ou plusieurs des éléments suivants :
un premier état de fonctionnement anormal qui représente une connexion électrique défaillante entre le potentiel de masse (*V*_{GND}) et le capteur de vitesse (110),
un deuxième état de fonctionnement anormal qui représente une connexion électrique défectueuse entre le détecteur d'état (220) et le capteur de vitesse (110),
un troisième état de fonctionnement anormal qui représente une connexion électrique défectueuse entre la tension de fonctionnement (*V*ₛ) et le capteur de vitesse (110),

10. Circuit de mesure de vitesse (200) selon l'une quelconque des revendications 1 à 9, dans lequel le dispositif de commande (230) est agencé pour effectuer au moins l'une des opérations suivantes :
le fait de fournir une indication de vitesse (131) en réponse au signal de diagnostic (223) indiquant un état de fonctionnement normal du circuit de mesure de vitesse (200),
le fait de s'abstenir de fournir l'indication de vitesse (131) en réponse au signal de diagnostic (223) indiquant un état de fonctionnement anormal du circuit de mesure de vitesse (200).

11. Circuit de mesure de vitesse (200) selon la revendication 10, dans lequel le calcul de la vitesse de rotation comprend l'un des éléments suivants :
le calcul de la vitesse de rotation en fonction d'une fréquence respective de changements de l'état haut à l'état bas et/ou de l'état bas à l'état haut indiquée dans ladite série temporelle d'indications d'état (121) au vu de ladite relation prédéfinie,
la dérivation d'un signal de vitesse numérique qui comprend un train d'impulsions dérivé sur la base de la série temporelle d'indications d'état (121) et le calcul de la vitesse de rotation sur la base d'une fréquence d'impulsion du train d'impulsions au vu de ladite relation prédéfinie.

12. Circuit de mesure de vitesse (200) selon l'une quelconque des revendications 1 à 11, dans lequel le dispositif de commande (230) est agencé pour effectuer au moins l'une des opérations suivantes :
la dérivation d'une indication d'état de fonctionnement (233) qui indique un état de fonctionnement normal du circuit de mesure de vitesse (200) en réponse au signal de diagnostic (223) indiquant un état de fonctionnement normal du circuit de mesure de vitesse (200),
la dérivation d'une indication d'état opérationnel (233) qui indique un état opérationnel anormal du circuit de mesure de vitesse (200) et identifie un état opérationnel anormal indiqué par le signal de diagnostic (223) en réponse au signal de diagnostic (223) indiquant un état opérationnel anormal du circuit de mesure de vitesse (200).

13. Procédé (300) de mesure d'une vitesse de rotation d'un moteur à combustion via l'utilisation d'un circuit de mesure de vitesse (300), le procédé (300) comprenant :
la réception (302), en provenance d'un capteur de vitesse (110) couplé pour mesurer la vitesse de rotation, d'un signal électrique qui a une tension de signal variable dans le temps (*V*₁₁₁) qui présente des maxima locaux à une fréquence qui a une relation prédéfinie avec la vitesse de rotation ;
la dérivation (304), sur la base du signal électrique, d'une indication d'état (121) qui indique si le signal électrique représente un état haut ou un état bas ;
la dérivation (306), sur la base du signal électrique, d'un signal de diagnostic (223) qui décrit l'état de fonctionnement du circuit de mesure de vitesse (220), dans lequel le signal de diagnostic (223) transmet une valeur de diagnostic qui décrit l'état de fonctionnement actuel du circuit de mesure de vitesse (200), dans lequel l'état de fonctionnement actuel est l'un d'un état de fonctionnement normal ou d'un état de fonctionnement anormal et la valeur de diagnostic est dérivée sur la base de la tension de signal (*V*₁₁₁) du signal électrique ; et
**caractérisé en ce que** le procédé (300) comprend la dérivation (308) de la vitesse de rotation sur la base d'une série temporelle des indications d'état (121) en fonction du signal de diagnostic (223) au vu de ladite relation prédéfinie,
dans lequel la valeur diagnostique est dérivée via l'application des éléments suivants :
deux ou plusieurs sous-plages de tension de signal prédéfinies, chacune associée à un état de fonctionnement anormal respectif du circuit de mesure de vitesse (200), et
deux ou plusieurs sous-plages de tension de diagnostic intermédiaires prédéfinies, chacune représentant un état de fonctionnement anormal respectif du circuit de mesure de vitesse (200).
